# EUROPÄISCHE PATENTSCHRIFT

(11) **EP 2 563 877 B1**
(45) Veröffentlichungstag und Bekanntmachung des Hinweises auf die Patenterteilung: **08.06.2016**
(21) Anmeldenummer: 11716485.5
(22) Anmeldetag: 20.04.2011
(51) Int. Cl.: C09K 21/12, C08K 5/5313

(54) **FLAMMSCHUTZMITTEL-STABILISATOR-KOMBINATION FÜR THERMOPLASTISCHE UND DUROPLASTISCHE POLYMERE**
FLAME-PROOF AGENT-STABILISER COMBINATION FOR THERMOPLASTIC AND DUROPLASTIC POLYMERS
ASSOCIATION AGENT IGNIFUGE-STABILISATEUR POUR POLYMÈRES THERMOPLASTIQUES ET THERMODURCISSABLES

(30) Priorität: 29.04.2010 DE 102010018681
(43) Veröffentlichungstag der Anmeldung: 06.03.2013
(73) Patentinhaber: CLARIANT INTERNATIONAL LTD, 4132 Muttenz (CH)
(72) Erfinder: HÖROLD, Sebastian, 86420 Diedorf (DE); BAUER, Harald, 50170 Kerpen (DE)
(74) Vertreter: Mikulecky, Klaus
(86) Internationale Anmeldenummer: PCT/EP2011/002016
(87) Internationale Veröffentlichungsnummer: WO 2011/134622

(56) Entgegenhaltungen:
- WO-A1-2009/109318
- DE-A1- 10 241 126
- DE-A1- 19 734 437
- DE-A1- 19 820 398
- DE-A1- 19 933 901
- US-A- 3 594 347
- US-A1- 2010 076 132

## Beschreibung

Die Erfindung betrifft eine Flammschutzmittel-Stabilisator-Kombination für thermoplastische und duroplastische Polymere sowie polymere Formmassen und Formkörper, die solche Flammschutzmittel-Stabilisator-Kombinationen enthalten.

Die Verarbeitung von Kunststoffen erfolgt bis auf wenige Ausnahmen in der Schmelze. Die damit verbundenen Struktur- und Zustandsänderungen übersteht kaum ein Kunststoff, ohne sich in seiner chemischen Struktur zu verändern. Vernetzungen, Oxidation, Molekulargewichtsänderungen und damit auch Änderungen der physikalischen und technischen Eigenschaften können die Folge sein. Um die Belastung der Polymere während der Verarbeitung zu reduzieren, setzt man je nach Kunststoff unterschiedliche Additive ein.

In der Regel werden unterschiedliche Additive gleichzeitig verwendet, von denen jedes für sich eine Aufgabe übernimmt. So werden Antioxidantien und Stabilisatoren eingesetzt, damit der Kunststoff ohne chemische Schädigung die Verarbeitung übersteht und anschließend lange Zeit gegen äußere Einflüsse wie Hitze, UV-Licht, Witterung und Sauerstoff (Luft) stabil ist. Neben der Verbesserung des Fließverhaltens verhindern Gleitmittel ein zu starkes Kleben der Kunststoffschmelze an heißen Maschinenteilen und wirken als Dispergiermittel für Pigmente, Füll- und Verstärkungsstoffe.

Durch die Verwendung von Flammschutzmitteln kann die Stabilität des Kunststoffs bei der Verarbeitung in der Schmelze beeinflusst werden. Flammschutzmittel müssen häufig in hohen Dosierungen zugesetzt werden, um eine ausreichende Flammwidrigkeit des Kunststoffs nach internationalen Normen sicherzustellen. Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann zu verstärktem Polymerabbau, zu Vernetzungsreaktionen, zu Ausgasungen oder Verfärbungen kommen.

So werden Polyamide im Allgemeinen durch kleine Mengen von Kupferhalogeniden sowie aromatische Amine und sterisch gehinderte Phenole stabilisiert, wobei die Erzielung einer langfristigen Stabilität bei hohen Dauergebrauchstemperaturen im Vordergrund steht (H. Zweifel (Ed.): "Plastics Additives Handbook", 5th Edition, Carl Hanser Verlag, München, 2000, Seiten 80 bis 84).

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als die Alkalimetallsalze (EP-A-0 699 708). Synergistische Kombinationen von Phosphinaten mit bestimmten stickstoffhaltigen Verbindungen sind in einer ganzen Reihe von Polymeren als Flammschutzmittel effektiver als die Phosphinate allein (PCT/EP97/01664 sowie DE-A-197 34 437 und DE-A-197 37 727).

Ebenso können duroplastische Polymere mit bestimmten Phosphinaten vorteilhaft flammfest eingestellt werden.

Polymerformmassen mit phosphorhaltigen Flammschutzmitteln können mit Carbodiimiden, Isocyanaten und Isocyanuraten stabilisiert werden (DE-A-199 20 276).

Insbesondere bei der Verwendung phosphorhaltiger Flammschutzmittel in Polyamiden erwies sich die Wirkung der bisher beschriebenen Stabilisatoren als unzureichend, speziell um die bei der Verarbeitung auftretenden Effekte wie Verfärbung und Molekulargewichtsabbau zu unterdrücken.

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Bei der Verwendung dieser sehr wirksamen Flammschutzmittel kann es aber zu partiellem Polymerabbau sowie zu Verfärbungen des Polymers, insbesondere bei Verarbeitungstemperaturen oberhalb von 300 °C, kommen.

Die EP-A-0794189 beschreibt Phosphonigsäuresalze als Flammschutzmittel. Die Phosphonigsäure leitet sich von der allgemeinen Formel RHP(O)(OH) ab, wobei R ein Alkylrest mit 1 bis 12 C-Atomen oder ein Arylrest oder ein Alkylarylrest ist. Bevorzugte Salze sind die Aluminium- oder Calciumsalze. Die Dosierung ist allerdings mit 20 bis 30 Gew.-% in einem Polyester relativ hoch.

Die US-A-2008/0132619 beschreibt Phosphinsäuresalze, die sich ab 300 °C verflüchtigen, als wirksame Flammschutzadditive verglichen mit weniger flüchtigen Phosphinsäuresalzen.

Die PCT/US2006/045770 beschreibt flammwidrige thermoplastische Polymere, die eine Mischung aus Metallsalzen von Dialkylphosphinsäuren und von Monoalkylphosphinsäuren enthalten. Als wirksam angegeben sind lediglich Salze der Isobutylphosphinsäure.

Die US 2010/0076132 A1 beschreibt eine flammhemmende thermoplastische Polymerzusammensetzung aus einem Polymer und einer Mischung von Metallsalzen von Dialkylphosphinsäuren und Monoalkinphosphinsäuren. Die Beispiele umfassen aber lediglich eine Mischung aus Diisobutylphosphinsäuresalz mit Monoisobutylsäuresalz.

In der DE 10241126 A1 wird eine Flammschutzmittel-Stabilisator-Kombination für thermoplastische Polymere beschrieben, die ein (Di)Phosphinsäuresalz, einen Synergisten und eine weitere Komponente umfasst.

Schließlich beschreibt die WO 2009/109318 A1 ein Verfahren zur Herstellung flammwidriger, nicht korrosiver und gut fließfähigen Polyamid- und Polyesterformmassen, bei dem eine Flammschutzmittelmischung aus einem Diphosphinsäuresalz und ein Metallsalz einer organischen Säure bzw. ausgewählte Metallverbindungen eingesetzt werden.

Nachteilig bei Verwendung von Phosphinsäuresalzen mit höherer Flüchtigkeit ist die Bildung von Formbelägen beim Spritzguss, die Bildung von Ausblühungen bei feucht-warmen Lagerungen und der Auftritt von Emmisionen beim Compoundieren.

Es war daher Aufgabe der vorliegenden Erfindung, Flammschutzmittel-Kombinationen für thermoplastische und duroplastische Kunststoffe zur Verfügung zu stellen, die neben der Flammwidrigkeit auch eine stabilisierende Wirkung auf den Kunststoff ausüben, nicht zu Formbelägen führen und nicht zu Ausblühungen aus den Kunststoffen.

Gegenstand der Erfindung ist daher eine Flammschutzmittel-Stabilisator-Kombination, enthaltend als Komponente A 40 bis 99 Gew.-% eines Phosphinsäuresalzes der Formel (I) und/oder eines Diphosphinsäuresalzes der Formel (II) und/oder deren Polymere, 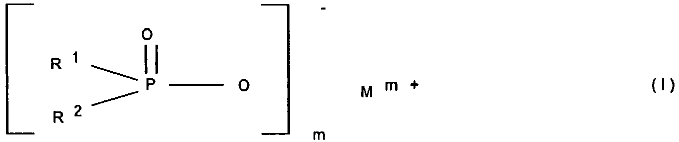 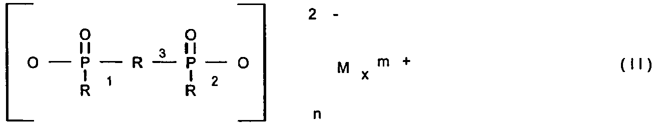 worin
- R¹, R²: gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl,
- R³: C₁-C₁₀-Alkylen, linear oder verzweigt, C₆-C₁₀-Arylen, C₇-C₁₈ -Alkylarylen oder C₇-C₁₈-Arylalkylen;
- M: Mg, Ca, Al, Sb, Sn, Ge, Ti, Zn, Fe, Zr, Ce, Bi, Sr, Mn, Li, Na, K und/oder eine protonierte Stickstoffbase;
- m: 1 bis 4;
- n: 1 bis 4;
- x: 1 bis 4 bedeuten,
als Komponente B 1 bis 60 Gew.-% eines Phosphinsäuresalzes der allgemeinen Formel (III) 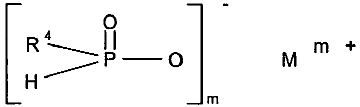 worin
- R⁴: C₁-C₁₈-Alkyl linear, verzweigt oder cyclisch, C₆-C₁₈-Aryl, C₇-C₁₈-Arylalkyl oder C₇-C₁₈-Alkylaryl und
- M: Mg, Ca, Al, Sb, Sn, Ge, Ti, Zn, Fe, Zr, Ce, Bi, Sr, Mn, Li, Na, K und/oder eine protonierte Stickstoffbase bedeuten,
als Komponente C 0 bis 50 Gew.-% eines stickstoffhaltigen Synergisten und/oder eines Phosphor/Stickstoff Flammschutzmittels,
als Komponente D 0 bis 10 Gew.-% eines Zinksalzes oder eines basischen oder amphoteren Oxides, Hydroxides, Carbonates, Silikates, Borates, Stannates, gemischten Oxid-Hydroxides, Oxid-Hydroxid-Carbonates, Hydroxid-Silikates oder Hydroxid-Borates oder Mischungen dieser Stoffe,
als Komponente E 0 bis 10 Gew. % Phosphonit oder Phosphonit/Phosphit-Gemisch und als Komponente F 0 bis 10 Gew.% Ester und/oder Salze von langkettigen Fettsäuren mit 14 bis 40 C-Atomen, wobei die Summe der Komponenten immer 100 Gew.-% beträgt,
mit der Maßgabe, dass wenn R⁴ C₁-C₁₈-Alkyl bedeutet, dass dann mindestens eine der Gruppen R¹ und/oder R² C₆-C₁₈-Aryl, C₇-C₁₈-Arylalkyl und/oder C₇-C₁₈-Alkylaryl bedeutet.

In einer ersten Ausführungsform (Ausführungsform I) sind bevorzugt R¹ und R² gleich oder verschieden und bedeuten C₁-C₁₈-Alkyl linear, verzweigt oder cyclisch und R⁴ bedeutet C₆-C₁₈-Aryl, C₇-C₁₈-Arylalkyl oder C₇-C₁₈-Alkylaryl.

In einer anderen Ausführungsform (Ausführungsform II) bedeutet mindestens eine der Gruppen R¹ und/oder R² C₆-C₁₈-Aryl, C₇-C₁₈-Arylalkyl und/oder C₇-C₁₈-Alkylaryl und R⁴ bedeutet dann ausschließlich C₁-C₁₈-Alkyl.

In einer weiteren Ausführungsform (Ausführungsform III) bedeutet mindestens eine der Gruppen R¹ und/oder R² C₆-C₁₈-Aryl, C₇-C₁₈-Arylalkyl und/oder C₇-C₁₈-Alkylaryl und R⁴ bedeutet C₆-C₁₈-Aryl, C₇-C₁₈-Arylalkyl oder C₇-C₁₈-Alkylaryl.

Bevorzugt sind in der Ausführungsform I R¹ und R² gleich oder verschieden und bedeuten Methyl, Ethyl, n-Propyl, iso-Propyl, n-Butyl, tert.-Butyl und/oder n-Pentyl und R⁴ bedeutet Phenyl , Naphtyl oder ein mono-, di- oder tri-Methylsubstituertes Phenyl.

Bevorzugt bedeutet in der Ausführungsform II R¹ Methyl, Ethyl, n-Propyl, iso-Propyl, n-Butyl, tert.-Butyl oder n-Pentyl und R² Phenyl, Naphtyl oder ein mono-, di- oder tri-Methylsubstituertes Phenyl oder R² bedeutet Methyl, Ethyl, n-Propyl, iso-Propyl, n-Butyl, tert.-Butyl oder n-Pentyl und R¹ Phenyl , Naphtyl oder ein mono-, di- oder tri-Methylsubstituertes Phenyl und dann bedeutet R⁴ Methyl, Ethyl, n-Propyl, iso-Propyl, n-Butyl, tert.-Butyl oder n-Pentyl.

Bevorzugt bedeutet in der Ausführungsform III R¹ Methyl, Ethyl, n-Propyl, iso-Propyl, n-Butyl, tert.-Butyl oder n-Pentyl und R² Phenyl, Naphtyl oder ein mono-, di- oder tri-Methylsubstituertes Phenyl oder R² bedeutet Methyl, Ethyl, n-Propyl, iso-Propyl, n-Butyl, tert.-Butyl oder n-Pentyl und R¹ Phenyl , Naphtyl oder ein mono-, di- oder tri-Methylsubstituertes Phenyl und dann bedeutet R⁴ Phenyl, Naphtyl oder ein mono-, di- oder tri-Methylsubstituertes Phenyl.

Bevorzugt enthält die erfindungsgemäße Flammschutzmittel-Stabilisator-Kombination 75 bis 95 Gew.-% Komponente A und 5 bis 25 Gew.-% Komponente B.

Bevorzugt handelt es sich bei der Komponente C um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon.

Besonders bevorzugt handelt es sich bei der Komponente C um Melem, Melam, Melon und/oder höherkondensierte Verbindungen davon und/oder um Dimelaminpyrophosphat, Melaminpolyphosphat, Melempolyphosphat, Melampolyphosphat, Melonpolyphosphat und/oder gemischte Polysalze davon.

Bevorzugt handelt es sich bei der Komponente C auch um stickstoffhaltige Phosphate der Formeln (NH₄)_{y} H_{3-y} PO₄ bzw. (NH₄ PO₃)_{z} mit y gleich 1 bis 3 und z gleich 1 bis 10.000.

Besonders bevorzugt handelt es sich bei der Komponente C um Ammoniumhydrogenphosphat, Ammoniumdihydrogenphosphat und/oder Ammoniumpolyphosphat.

Bevorzugt handelt es sich bei der Komponente C auch um Benzoguanamin, Tris(hydroxyethyl)isocyanurat, Allantoin, Glycouril, Melamin, Melamincyanurat, Dicyandiamid und/oder Guanidin.

Bevorzugte Komponenten D sind Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat.

Bevorzugt handelt es sich bei der Komponente E um Phosphonite der allgemeinen Struktur

R-[P(OR₁)₂]ₘ (IV)

wobei
- R: ein ein- oder mehrwertiger aliphatischer, aromatischer oder heteroaromatischer organischer Rest ist und
- R₁: eine Verbindung der Struktur (V) 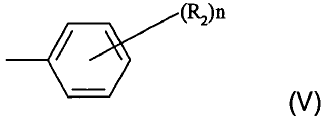 ist oder die beiden Reste R₁ eine verbrückende Gruppe der Struktur (VI) bilden 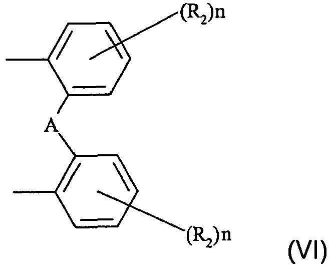 mit
A direkter Bindung, O, S, C₁₋₁₈-Alkylen (linear oder verzweigt), C₁₋₁₈-Alkyliden (linear oder verzweigt), in denen
R₂ unabhängig voneinander C₁₋₁₂-Alkyl (linear oder verzweigt), C₁₋₁₂-Alkoxy, C₅₋₁₂-Cycloalkyl bedeuten und
n 0 bis 5 sowie m 1 bis 4 bedeutet.

Bevorzugt handelt es sich bei der Komponente F um Umsetzungsprodukte von langkettigen Fettsäuren mit 14 bis 40 C-Atomen mit mehrwertigen Alkoholen wie Ethylenglykol, Glycerin, Trimethylolpropan und/oder Pentaerythrit und/oder um Alkali-, Erdalkali-, Aluminium- und/oder Zinksalze von langkettigen Fettsäuren mit 14 bis 40 C-Atomen.

Die Erfindung betrifft auch eine flammfest ausgerüstete Kunststoff-Formmasse, enthaltend eine Flammschutzmittel-Stabilisator-Kombination gemäß einem oder mehreren der Ansprüche 1 bis 16, dadurch gekennzeichnet, dass es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

Bevorzugt enthält die flammfest ausgerüstete Kunststoff-Formmasse 50 bis 98 Gew.-% Kunststoff-Formmasse und 2 bis 50 Gew.-% der Flammschutzmittel-Stabilisator-Kombination gemäß einem oder mehreren der Ansprüche 1 bis 16.

Die Erfindung betrifft schließlich auch Polymer-Formkörper, -Filme, -Fäden und -Fasern enthaltend eine Flammschutzmittel-Stabilisator-Kombination gemäß einem oder mehreren der Ansprüche 1 bis 16, dadurch gekennzeichnet, dass es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt und dass sie 50 bis 98 Gew.-% Polymer-Formkörper, -Filme, -Fäden und/oder -Fasern und 2 bis 50 Gew.% der Flammschutzmittel-Stabilisator-Kombination gemäß einem oder mehreren der Ansprüche 1 bis 16 enthält.

Überraschenderweise wurde gefunden, dass erfindungsgemäße Kombinationen von bestimmten Salzen der Phosphinsäuren der Formeln (I) bzw. (II) mit ausgewählten Salzen der Phosphinsäure der Formel (III) eine deutlich bessere Flammschutzwirkung und eine deutlich verbesserte Stabilität bei der Einarbeitung in Polymere aufweisen als bei der Verwendung von Salzen der Dialkylphosphinsäuren mit Salzen der Monoalkylphosphinsäuren, wie in der PCT/US2006/045770 beschrieben. Durch den Zusatz von stickstoffhaltigen Synergisten oder eines Phosphor/Stickstoff Flammschutzmittels kann die Flammschutzwirkung weiter verbessert werden und der Polymerabbau verhindert werden. Darüber hinaus werden keine Formbeläge und keine Ausblühungen beobachtet.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methylphenylen, Ethylphenylen, tert.-Butylphenylen, Methylnaphthylen, Ethylnaphthylen oder tert.-Butylnaphthylen; Phenylmethylen, Phenylethylen, Phenylpropylen oder Phenylbutylen.

Unter protonierten Stickstoffbasen werden bevorzugt die protonierten Basen von Ammoniak, Melamin und Triethanolamin, insbesondere NH4⁺, verstanden.

Geeignete Phosphinate der Formeln (I) und (II) sind in der PCT/WO97/39053 beschrieben, auf die ausdrücklich Bezug genommen wird.

Besonders bevorzugte Phosphinate sind Aluminium-, Calcium- und Zinkphosphinate.

Erfindungsgemäß sind auch synergistische Kombinationen von den genannten Phosphinaten mit stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der Phosphinate kann durch Kombination mit weiteren Flammschutzmitteln, vorzugsweise stickstoffhaltigen Synergisten oder Phosphor/Stickstoff Flammschutzmitteln verbessert werden.

Bevorzugt handelt es sich bei den stickstoffhaltigen Synergisten um solche der Formeln (XII) bis (XVII) oder Gemische davon 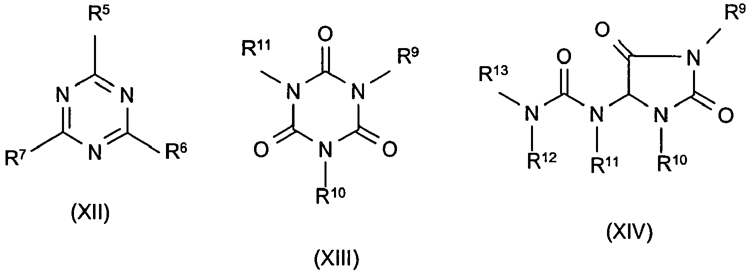 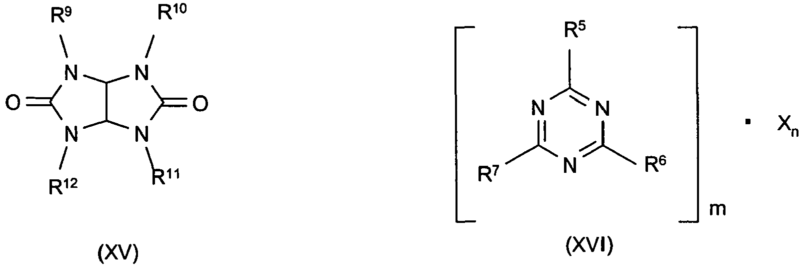 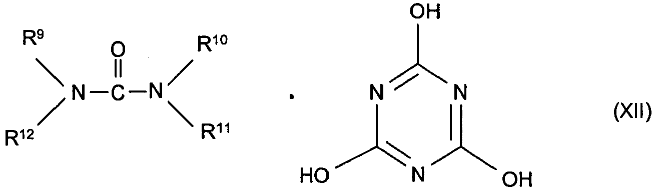 worin
- R⁵ bis R⁷: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalky, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, ggf. substituiert mit einer Hydroxy- oder einer C₁-C₄-Hydroxyalkyl-Funktion, C₂-C₈-Alkenyl, C₁C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4 und X Säuren, die Addukte mit Triazinverbindungen (III) bilden können, bedeuten;
oder um oligomere Ester des Tris(hydroxyethyl)isocyanurats mit aromatischen Polycarbonsäuren.

Erfindungsgemäß sind auch folgende Kombinationen der Komponenten A, B, C, D, E und F:
AB;
ABC, ABD, ABE, ABF;
ABCD, ABCE, ABCF, ABDE, ABDF, ABEF;
ABCDE, ABCDF, ABCEF;
ABCDEF.

Dies schließt auch Kombinationen mit ein, in denen z.B. zwei oder mehr unterschiedliche Komponenten des gleichen Typs enthalten sind, etwa ABC¹C² oder ABC¹C²C³DE¹E²F usw.

Der erfindungsgemäßen Kombination aus den Komponenten A und B sowie ggf. C, D, E und/oder F können Additive zugesetzt werden, wie z. B. Antioxidantien, UV-Absorber, Lichtschutzmittel, Metalldesaktivatoren, Peroxidzerstörende Verbindungen, Polyamidstabilisatoren, Basische Co-Stabilisatoren, Nukleierungsmittel, Füllstoffe und Verstärkungsmittel, weitere Flammschutzmittel sowie sonstige Zusätze in beliebiger Kombination.

Geeignete Antioxidantien sind beispielsweise alkylierte Monophenole, z. B. 2,6-Di-tert-butyl-4-methylphenol; 1.2-Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol;
O-, N- und S-Benzylverbindungen, z. B. 3,5,3',5'-Tetra-tert-butyl-4,4'-dihydroxydi-benzylether; Hydroxybenzylierte Malonate, z. B. Dioctadecyl-2,2-bis-(3,5-di-tert-butyl-2-hydrorybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzol, 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4-Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehr-wertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehrwertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Geeignete UV-Absorber und Lichtschutzmittel sind beispielsweise 2-(2'-Hydroxy-phenyl)-benzotriazole, wie z. B. 2-(2'-Hydroxy-5'-methylphenyl)-benzotriazol; 2-Hydroxybenzophenone, wie z. B. das 4-Hydroxy, 4-Methoxy-, 4-Octoxy-, 4-Decyloxy-, 4-Dodecyloxy-, 4-Benzyloxy-, 4,2',4-Trihydroxy-, 2'-Hydroxy-4,4'-dimethoxy-Derivat;
Ester von gegebenenfalls substituierten Benzoesäuren, wie z. B. 4-tert-Butyl-phenylsalicylat, Phenylsalicylat, Octylphenyl-salicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäure-octadecylester, 3,5-Di-tert-butyl-4-hydroxybenzoe-säure-2-methyl-4,6-di-tert-butylphenylester; Acrylate, wie z. B. α-Cyan-β,β-diphenylacrylsäure-ethylester bzw. -isooctylester, α-Carbomethoxy-zimtsäuremethylester, α-Cyano-β-methyl-p-methoxy-zimtsäuremethyl-ester bzw. -butylester, α-Carbomethoxy-p-methoxy-zimtsäuremethylester, N-(β-Carbo-methoxy-β-cyanovinyl)-2-methyl-indolin.

Weiterhin Nickelverbindungen, wie z. B. Nickelkomplexe des 2,2'-Thio-bis-[4(1,1,3,3-tetramethylbutyl)phenols], wie der 1:1-oder der 1:2-Komplex, gegebenenfalls mit zusätzlichen Liganden, wie n-Butylamin, Triethanolamin oder N-Cyclohexyl-diethanolamin, Nickeldibutyldithiocarbamat, Nickelsalze von 4-Hydroxy-3,5-di-tert-butylbenzylphosphonsäure-monoalkylestern, wie vom Methyl- oder Ethylester, Nickelkomplexe von Ketoximen, wie von 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden; Sterisch gehinderte Amine, wie z. B. Bis-(2,2,6,6-tetramethyl-piperidyl)-sebacat; Oxalsäurediamide, wie z. B. 4,4'-Di-octyloxy-oxanilid; 2-(2-Hydroxyphenyl)-1,3,5-triazine, wie z. B. 2,4,6-Tris(2-hydroxy-4-octyloxyphenyl)-1,3,5-triazin.

Geeignete Metalldesaktivatoren sind z. B. N,N' -Diphenyloxalsäurediamid, N-Salicylal-N'-salicyloylhydrazin, N,N'-Bis-(salicyloyl)-hydrazin, N,N'-Bis-(3,5-di-tert-butyl-4-hydroxyphenylpropionyl)-hydrazin, 3-Salicyloylamino- 1,2,4-triazol, Bis-(benzyliden)-oxalsäuredihydrazid, Oxanilid, Isophthalsäure-dihydrazid, Sebacinsäure-bis-phenylhydrazid, N,N'-Diacetyl-adipinsäure-dihydrazid, N,N'-Bis-salicyloyl-oxalsäure-dihydrazid, N,N'-Bis-salicyloyl-thiopropionsäure-dihydrazid.

Geeignete peroxidzerstörende Verbindungen sind z. B. Ester der β-Thiodipropion-säure, beispielsweise der Lauryl-, Stearyl-, Myristyl- oder Tridecylester, Mercapto-benzimidazol, das Zinksalz des 2-Mercaptobenzimidazols, Zink-dibutyl-dithiocarbamat, Dioctadecyldisulfid, Pentaerythrit-tetrakis-(β-dodecylmercapto)-propionat.

Geeignete Polyamidstabilisatoren sind z. B. Kupfersalze in Kombination mit Jodiden und/oder Phosphorverbindungen und Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure.

Zu den Füllstoffen und Verstärkungsmitteln gehören z. B. Calciumcarbonat, Silikate, Glasfasern, Asbest, Talk, Kaolin, Glimmer, Bariumsulfat, Metalloxide und -hydroxide, Russ, Graphit und andere.

Als weitere Flammschutzmittel sind z. B. Arylphosphate, Phosphonate, Salze der Hypophosphorigen Säure sowie roter Phosphor geeignet.

Zu den sonstigen Zusätzen zählt man z. B. Weichmacher, Blähgraphit, Gleitmittel, Emulgatoren, Pigmente, optische Aufheller, Flammschutzmittel, Antistatika und Treibmittel.

Diese zusätzlichen Additive können vor, zusammen mit oder nach Zugabe der Flammschutzmittel den Polymeren zugegeben werden. Die Dosierung sowohl dieser Additive wie auch die der Flammschutzmittel kann dabei als Feststoff, in Lösung oder Schmelze sowie auch in Form von festen oder flüssigen Mischungen oder Masterbatches/Konzentraten erfolgen.

Bevorzugt handelt es sich bei den Metalloxiden um Magnesiumoxid, Calciumoxid, Aluminiumoxid, Zinkoxid, Manganoxid und/oder Zinnoxid.

Bevorzugt handelt es sich bei den Hydroxiden um Aluminiumhydroxid, Böhmit, Magnesiumhydroxid, Hydrotalcit, Hydrocalumit, Calciumhydroxid, Zinkhydroxid, Zinnoxidhydrat und/oder Manganhydroxid.

Bevorzugt handelt es sich bei der Komponente D um Zinkborat, basisches Zinksilikat, Zinkstannat, Dihydrotalcit und/oder Böhmit.

Bevorzugt sind bei den Phosphoniten (Komponente E) die Reste
- R: C₄₋₁₈-Alkyl (linear oder verzweigt), C₄₋₁₈-Alkylen (linear oder verzweigt), C₅₋₁₂-Cycloalkyl, C₅₋₁₂-Cycloalkylen, C₆₋₂₄-Aryl bzw. -Heteroaryl, C₆₋₂₄-Arylen bzw. Heteroarylen, welche auch weiter substituiert sein können;
- R₁: eine Verbindung der Struktur (V) oder (VI) mit
- R₂: unabhängig voneinander C₁₋₈-Alkyl (linear oder verzweigt), C₁₋₈-Alkoxy, -Cyclohexyl;
- A: direkte Bindung, O, C₁₋₈-Alkylen (linear oder verzweigt), C₁₋₈-Alkyliden (linear oder verzweigt) und
- n: 0 bis 3 und
- m: 1 bis 3.

Besonders bevorzugt sind bei den Phosphoniten (Komponente E) die Reste
- R: Cyclohexyl, Phenyl, Phenylen, Biphenyl und Biphenylen,
- R₁: eine Verbindung der Struktur (V) oder (VI) mit
- R₂: unabhängig voneinander C₁₋₈-Alkyl (linear oder verzweigt), C₁₋₈-Alkoxy, Cyclohexyl
- A: direkte Bindung, O, C₁₋₆-Alkyliden (linear oder verzweigt) und
- n: 1 bis 3 und
- m: 1 oder 2.

Weiterhin werden Gemische von Phosphoniten (Komponente E) in Kombination mit Phosphiten der Formel (VII)

P(OR₁)₃ (VII)

beansprucht, wobei R₁ die oben angegebenen Bedeutungen hat.

Insbesonders bevorzugt sind Verbindungen, die, basierend auf obigen Angaben, durch eine Friedel-Crafts-Reaktion eines Aromaten oder Heteroaromaten, wie Benzol, Biphenyl oder Diphenylether mit Phosphortrihalogeniden, bevorzugt Phosphortrichlorid, in Gegenwart eines Friedel-Crafts-Katalysators wie Aluminiumchlorid, Zinkchlorid, Eisenchlorid etc. sowie nachfolgender Reaktion mit den der Strukturen (V) und (VI) zugrundeliegenden Phenolen, hergestellt werden. Dabei werden ausdrücklich auch solche Gemische mit Phosphiten eingeschlossen, die nach der genannten Reaktionssequenz aus überschüssigem Phosphortrihalogenid und den vorstehend beschriebenen Phenolen entstehen.

Aus dieser Gruppe von Verbindungen sind wiederum die nachstehenden Strukturen (VIII) und (IX) bevorzugt: 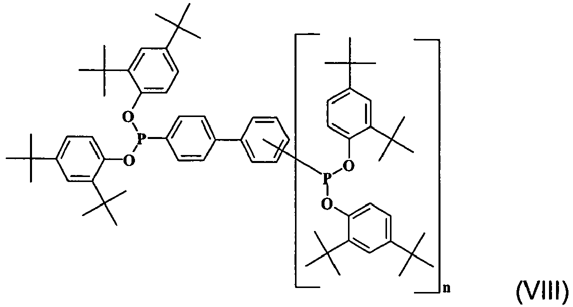 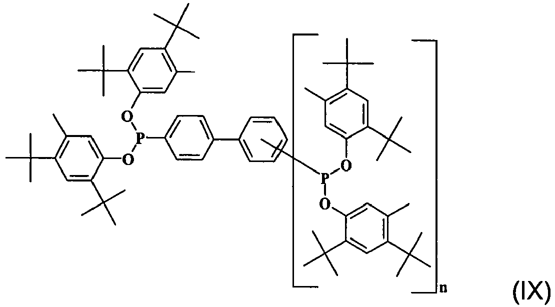 wobei n 0 oder 1 betragen kann und diese Gemische optional weiterhin noch Anteile der Verbindung (X) bzw. (XI) enthalten können:

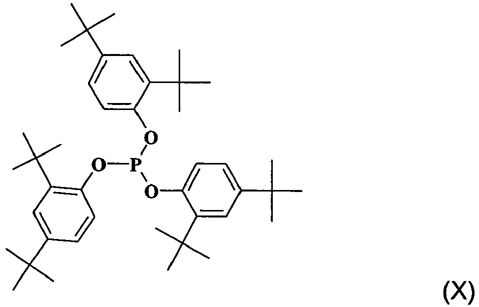

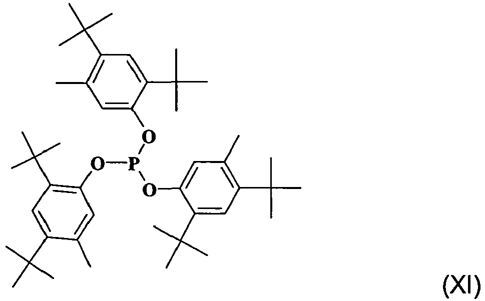

Geeignet als Komponente F sind Ester oder Salze von langkettigen aliphatischen Carbonsäuren (Fettsäuren), die typischerweise Kettenlängen von C₁₄ bis C₄₀ aufweisen. Bei diesen Estern handelt es sich um Umsetzungsprodukte der genannten Carbonsäuren mit gebräuchlichen mehrwertigen Alkoholen, wie z. B. Ethylenglykol, Glycerin, Trimethylolpropan oder Pentaerythrit. Als Salze der genannten Carbonsäuren kommen vor allem Alkali- oder Erdalkalisalze bzw. Aluminium- und Zinksalze in Betracht.

Bevorzugt handelt es sich bei der Komponente F um Ester oder Salze der Stearinsäure wie z. B. Glycerinmonostearat oder Calciumstearat.

Bevorzugt handelt es sich bei der Komponente F auch um Umsetzungsprodukte von Montanwachssäuren mit Ethylenglykol.

Bevorzugt handelt es sich bei den Umsetzungsprodukten um eine Mischung aus Ethylenglykol-Mono-Montanwachssäureester, Ethylenglykol-dimontanwachs-säureester, Montanwachssäuren und Ethylenglykol.

Bevorzugt handelt es sich bei der Komponente F um Umsetzungsprodukte von Montanwachssäuren mit einem Calciumsalz.

Besonders bevorzugt handelt es sich bei den Umsetzungsprodukten um eine Mischung aus 1,3-Budandiol-Mono-Montanwachssäureester, 1,3-Budandiol-Di-Montanwachssäureester, Montanwachssäuren, 1,3-Butandiol, Calciummontanat, und dem Calciumsalz.

Die Mengenverhältnisse der Komponenten A, B und ggf. C in der Flammschutzmittel-Stabilisator-Kombination hängen wesentlich vom vorgesehenen Anwendungsgebiet ab und können in weiten Grenzen variieren. Je nach Anwendungsgebiet enthält die Flammschutzmittel-Stabilisator-Kombination 50 bis 94 Gew.-% der Komponente A, 6 bis 50 Gew.-% der Komponente B und 0 bis 25 Gew.-% der Komponente C. Die Komponenten D, E und F werden unabhängig voneinander in 0 bis 10 Gew.-% bzw. 0 bis 3 Gew.-% zugegeben.

Bevorzugt enthält die Flammschutzmittel-Stabilisator-Kombination 50 bis 80 Gew.-% der Komponente A, 20 bis 50 Gew.-% der Komponente B, 0 bis 20 Gew.-% der Komponente C, 0 bis 5 Gew. % Komponente D, 0 bis 2 Gew. % Komponente E und 0 bis 2 Gew.% der Komponente F.

Besonders bevorzugt enthält die Flammschutzmittel-Stabilisator-Kombination 50 bis 75 Gew.-% der Komponente A, 25 bis 50 Gew.-% der Komponente B und 0 bis 15 Gew.-% der Komponente C, 0 bis 5 Gew. % Komponente D und 0 bis 1 Gew. % Komponente E und 0 bis 1 Gew.% Komponente F.

In einer anderen Ausführungsform enthält die Flammschutzmittel-Stabilisator-Kombination 50 bis 98 Gew.-% der Komponente A und 2 bis 50 Gew.-% der Komponente B, 0 bis 20 Gew.-% der Komponente C, 0 bis 5 Gew. % Komponente D, 0 bis 2 Gew. % Komponente E und 0 bis 2 Gew.% der Komponente F.

Weitere bevorzugte Flammschutzmittel-Stabilisator-Kombination enthalten
- 60 bis 94,9 Gew.-% der Komponente A, 5 bis 25 Gew.-% der Komponente B, 0,1 bis 10 Gew.-% der Komponente C, 0 bis 10 Gew. % Komponente D, 0 bis 3 Gew. % Komponente E und 0 bis 3 Gew.% der Komponente F; oder
- 50 bis 94,6 Gew.-% der Komponente A, 5 bis 25 Gew.-% der Komponente B, 0,1 bis 10 Gew.-% der Komponente C, 0,1 bis 10 Gew. % Komponente D, 0,1 bis 3 Gew. % Komponente E und 0,1 bis 2 Gew.% der Komponente F; oder - 45 bis 89,7 Gew.-% der Komponente A, 10 bis 30 Gew.-% der Komponente B, 0,1 bis 20 Gew.-% der Komponente C, 0 bis 10 Gew. % Komponente D, 0,1 bis 3 Gew. % Komponente E und 0,1 bis 2 Gew.% der Komponente F;

### Besonders bevorzugte erfindungsgemäße Flammschutzmittel-Stabilisator-Kombinationen enthalten

50 bis 75 Gew.-% Aluminiumsalz der Diethylphosphinsäure, Aluminiumsalz der Diphenylphosphinsäure, Aluminiumsalz der Methylethylphosphinsäure, Aluminiumsalz der Methylphenylphosphinsäure, Zinksalz der Diethylphosphinsäure, Zinksalz der Methylethylphosphinsäure und/oder Zinksalz der Diphenylphosphinsäure;
25 bis 50 Gew.-% Aluminiumsalz der Monophenylphosphinsäure, Zinksalz der Monophenylphosphinsäure und/oder Aluminiumsalz der Monoethylphosphinsäure; 0 bis 15 Gew.-% Melaminpolyphosphat, Melamincyanurat, Ammoniumpolyphosphat und/oder Melaminpyrophosphat; 0 bis 5 Gew.-% Zinkborat, Böhmit, Hydrotalcit, Zinkstannat und/oder Magnesiumhydroxid;
0,05 bis 1 Gew.-% Phosphonit (z. B. Hostanox^{®} P-EPQ) und
0,05 bis 1 Gew.-% Calciummontanat, Calciumstearat und/oder Ethylenglykoldimontanwachssäureester;
wobei die gleichzeitige Anwesenheit des Aluminiumsalzes der Monoethylphosphinsäure mit einem Salz einer der vorgenannten Dialkylphosphinsäuren ausgeschlossen ist.

Die erfindungsgemäße Flammschitzmittel-Stabilisator-Kombination kann zudem Carbodiimide enthalten.

Die Erfindung betrifft auch eine flammfest ausgerüstete Kunststoff-Formmasse, enthaltend die erfindungsgemäße Flammschutzmittel-Stabilisator-Kombination.

Bevorzugt handelt es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Besonders bevorzugt handelt es sich bei dem Kunststoff um Polyamide, Polyester und PPE/HIPS-Blends.

Bevorzugt wird die Flammschutzmittel-Stabilisator-Kombination in der Kunststoff-Formmasse in einer Gesamtmenge von 2 bis 50 Gew.-%, bezogen auf die Kunststoff-Formmasse, eingesetzt. Die Gesamtmenge der Kunststoff-Formmasse beträgt dann 50 bis 98 Gew.-%.

Besonders bevorzugt wird die Flammschutzmittel-Stabilisator-Kombination in der Kunststoff-Formmasse in einer Gesamtmenge von 10 bis 30 Gew.-%, bezogen auf die Kunststoff-Formmasse, eingesetzt. Die Gesamtmenge der Kunststoff-Formmasse beträgt dann 70 bis 90 Gew.-%.

Die Erfindung betrifft schließlich auch Polymer-Formkörper, -Filme, -Fäden und -Fasern enthaltend die erfindungsgemäße Flammschutzmittel-Stabilisator-Kombination.

Die Polymer-Formkörper, -Filme, -Fäden und -Fasern sind dadurch gekennzeichnet, dass es sich bei dem Polymer um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt.

Bevorzugt enthalten die Polymer-Formkörper, -Filme, -Fäden und -Fasern die Flammschutzmittel-Stabilisator-Kombination in einer Gesamt-Menge von 2 bis 50 Gew.-%, bezogen auf den Polymergehalt. Die Polymermenge beträgt dann 50 bis 98 Gew.-%.

Besonders bevorzugt enthalten die Polymer-Formkörper, -Filme, -Fäden und -Fasern die Flammschutzmittel-Stabilisator-Kombination in einer Gesamt-Menge von 10 bis 30 Gew.%, bezogen auf den Polymergehalt. Die Polymermenge beträgt dann 70 bis 90 Gew.-%.

In einer besondern Ausführungsform enthalten die Polymer-Formkörper, -Filme, -Fäden und -Fasern, bezogen auf den Polymergehalt, 2 bis 30 Gew.-% der Flammschutzmittel-Stabilisator-Kombination, bestehend aus 50 bis 80 Gew.-% der Komponente A, 20 bis 50 Gew.-% der Komponente B, 0 bis 20 Gew.-% der Komponente C, 0 bis 3 Gew.-% Komponente D, 0 bis 3 Gew.-% Komponente E und 0,1 bis 3 Gew.-% der Komponente F.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Die erfindungsgemäße Flammschutzmittel-Stabilisator-Kombination kann in thermoplastischen und duroplastischen Polymeren eingesetzt werden.

Geeignete Polyester leiten sich von Dicarbonsäuren und deren Ester und Diolen und/oder von Hydroxycarbonsäuren oder den entsprechenden Lactonen ab. Besonders bevorzugt wird Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate, sowie Block-Polyetherester, die sich von Polyethern mit Hydroxylendgruppen ableiten; ferner mit Polycarbonaten oder MBS modifizierte Polyester.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschützten Polyester hergestellten Fäden und Fasern 0,1 bis 18, bevorzugt 0,5 bis 15 und bei Folien 0,2 bis 15, bevorzugt 0,9 bis 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt handelt es sich bei den duroplastischen Polymeren um ungesättigte Polyesterharze (UP-Harze), die sich von Copolyestern gesättigter und ungesättigter Dicarbonsäuren oder deren Anhydriden mit mehrwertigen Alkoholen, sowie Vinylverbindungen als Vernetzungsmittel ableiten. UP-Harze werden gehärtet durch radikalische Polymerisation mit Initiatoren (z. B. Peroxiden) und Beschleunigern.

Bevorzugte ungesättigte Dicarbonsäuren und -derivate zur Herstellung der Polyesterharze sind Maleinsäureanhydrid und Fumarsäure.

Bevorzugte gesättigte Dicarbonsäuren sind Phthalsäure, Isophthalsäure, Terephthalsäure, Tetrahydrophthalsäure, Adipinsäure.

Bevorzugte Diole sind 1,2 Propandiol, Ethylenglycol, Diethylenglycol und Neopentylglycol, Neopentylglycol, ethoxyliertes oder propoxyliertes Bisphenol A.

Bevorzugte Vinylverbindung zur Vernetzung ist Styrol.

Bevorzugte Härtersysteme sind Peroxide und Metallcoinitiatoren, z. B. Hydroperoxide und Cobaltoctanoat und/oder Benzoylperoxid und aromatische Amine und/oder UV-Licht und Photosensibilisatoren, z. B. Benzoinether.

Bevorzugte Hydroperoxide sind Di-tert.-butylperoxid, tert.-Butylperoctoat, tert.-Butylperpivalat, tert.-Butylper-2-ethylhexanoat, tert.-Butylpermaleinat, tert.-Butylperisobutyrat, Benzoylperoxid, Diacetylperoxid, Succinylperoxid, p-Chlorbenzoylperoxid und Dicyclohexylperoxiddicarbonat.

Bevorzugt werden Initiatoren in Mengen von 0,1 bis 20 Gew. -%, vorzugsweise 0,2 bis 15 Gew.-%, berechnet auf die Masse aller Comonomeren, eingesetzt.

Bevorzugte Metallcoinitiatoren sind Kobalt-, Mangan-, Eisen-, Vanadium-, Nickel-oder Bleiverbindungen. Bevorzugt werden Metallcoinitiatoren in Mengen von 0,05 bis 1 Gew.-%, berechnet auf die Masse aller Comonomeren, eingesetzt.

Bevorzugte aromatische Amine sind Dimethylanilin, Dimethyl-p-toluol, Diethylanilin und Phenyldiethanolamine.

Ein Verfahren zur Herstellung von flammwidrigen duroplastischen Massen ist dadurch gekennzeichnet, dass man ein duroplastisches Harz mit einer erfindungsgemäßen Flammschutz-Stabilisator-Kombination nach einem oder mehreren der Ansprüche 1 bis 16 und ggf. weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 20 bis 60 °C nass presst (Kaltpressung).

Ein weiteres Verfahren zur Herstellung von flammwidrigen duroplastischen Massen ist dadurch gekennzeichnet, dass man ein duroplastisches Harz mit einer erfindungsgemäßen Flammschutz-Stabilisator-Kombination nach einem oder mehreren der Ansprüche 1 bis 16 und ggf. weiteren Flammschutzmitteln, Synergisten, Stabilisatoren, Additiven und Füll- oder Verstärkungsstoffen vermischt und die resultierende Mischung bei Drücken von 3 bis 10 bar und Temperaturen von 80 bis 150 °C nass presst (Warm- oder Heisspressung).

Bevorzugt handelt es sich bei den Polymeren um vernetzte Epoxidharze, die sich von aliphatischen, cycloaliphatischen, heterocyclischen oder aromatischen Glycidylverbindungen ableiten, z. B. von Bisphenol-A-diglycidylethern und Bisphenol-F-di-glycidylethern, die mittels üblichen Härtern und/oder Beschleunigern vernetzt werden.

Geeignete Glycidylverbindungen sind Bisphenol-A-diglycidylester, Bisphenol-F-diglycidylester, Polyglycidylester von Phenol-Formaldehydharzen und Kresol-Formaldehydharzen, Polyglycidylester von Pththal-, Isophthal- und Terephthalsäure sowie von Trimellithsäure, N-Glycidylverbindungen von aromatischen Aminen und heterocyclischen Stickstoffbasen sowie Di- und Polyglycidylverbindungen von mehrwertigen aliphatischen Alkoholen.

Geeignete Härter sind aliphatische, cycloaliphatische, aromatische und heterocyclische Amine oder Polyamine wie Ethylendiamin, Diethylentriamin Triethylentetramin, Propan-1,3-diamin, Hexamethylendiamin, Aminoethylpiperazin, Isophorondiamin, Polyamidoamin, Diaminodiphenylmethan, Diaminodiphenylether, Diaminodiphenolsulfone, Anilin-Formaldehyd-Harze, 2,2,4-Trimethylhexan-1,6-diamin, m-Xylylendiamin, Bis(4-aminocyclohexyl)methan, 2,2-Bis(4-aminocyclohexyl)propan, 3-Aminomethyl-3,55-trimethylcyclohexylamin (Isophorondiamin), Polyamidoamine, Cyanguanidin und Dicyandiamid, ebenso mehrbasige Säuren oder deren Anhydride wie z. B. Phthalsäureanhydrid, Maleinsäureanhydrid, Tetrahydro-phthalsäureanhydrid, Methyltetrahydrophthalsäureanhydrid, Hexahydrophthalsäure-anhydrid und Methylhexahydrophthalsäureanhydrid sowie Phenole wie z. B. Phenol-Novolak-Harz, Cresol-Novolak-Harz, Dicyclopentadien-Phenol-Addukt-Harz, Phenolaralkyl-Harz, Cresolaralkyl-Harz, Naphtholaralkyl Harz, Biphenol-modifiziertes Phenolaralkyl-Harz, Phenoltrimethylolmethan-Harz, Tetraphenylolethan-Harz, Naphthol-Novolak-Harz, Naphthol-Phenol-Kocondensat-Harz, Naphthol-Cresol-Kocondensat-Harz, Biphenol- modifiziertes Phenol-Harz und Aminotriazinmodifiziertes Phenol-Harz. Alle Härter können alleine oder in Kombination miteinander eingesetzt werden.

Geeignete Katalysatoren bzw. Beschleuniger für die Vernetzung bei der Polymerisation sind tertiäre Amine, Benzyldimethylamin, N-Alkylpyridine, Imidazol, 1-Methylimidazol, 2-Methylimidazol, 2-Ethyl-4-methylimidazol, 2-Ethyl-4-methylimidazol, 2-Phenylimidazol, 2-Heptadecylimidazol, Metallsalze organischer Säuren, Lewis Säuren und Amin-Komplex-Salze.

Die Formulierung der Erfindung kann auch andere Additive, die herkömmlich in Epoxidharz-Formulierungen eingesetzt werden, wie Pigmente, Farbstoffe und Stabilisatoren, enthalten.

Epoxidharze sind geeignet zum Verguss von elektrischen bzw. elektronischen Bauteilen und für Tränk- und Imprägnierprozesse. In der Elektrotechnik werden Epoxidharze überwiegend flammwidrig ausgerüstet und für Leiterplatten und Isolatoren eingesetzt.

Bevorzugt handelt es sich bei den Polymeren um vernetzte Polymere, die sich von Aldehyden einerseits und Phenolen, Harnstoff oder Melamin andererseits ableiten, wie Phenol-Formaldehyd-, Harnstoff-Formaldehyd- und Melamin-Formaldehydharze. Bevorzugt handelt es sich bei den Polymeren um vernetzbare Acrylharze, die sich von substituierten Acrylsäureestern ableiten, wie z. B. von Epoxyacrylaten, Urethanacrylaten oder Polyesteracrylaten.

Bevorzugt handelt es sich bei den Polymeren um Alkydharze, Polyesterharze und Acrylatharze, die mit Melaminharzen, Harnstoffharzen, Isocyanaten, Isocyanuraten, Polyisocyanaten oder Epoxidharzen vernetzt sind.

Bevorzugte Polyole, sind Alkenoxidaddukte von Ethylenglykol, 1,2-Propandiol, Bisphenol A, Trimethylolpropan, Glycerin, Pentaerythrol, Sorbit, Zucker, abgebaute Stärke, Ethylendiamin, Diaminotoluol und/oder Anilin, die als Initiator dienen. Die bevorzugten Oxyalkylierungsmittel, enthalten bevorzugt 2 bis 4 Kohlenstoffatome, besonders bevorzugt sind Ethylenoxid und Propylenoxid.

Bevorzugte Polyester-Polyole werden durch Polykondensation eines Polyalkoholes wie Ethylenglykol, Diethylenglykol, Propylenglykol, 1,4-Butandiol, 1,5-Pentandiol, Methylpentandiol, 1,6-Hexandiol, Trimethylolpropan, Glycerin, Pentaerythritol, Diglycerol, Traubenzucker und/oder Sorbit mit einer dibasischen Säure wie Oxalsäure, Malonsäure, Bernsteinsäure, Weinsäure, Adipinsäure, Sebacinsäure, Maleinsäure, Fumarsäure, Phthalsäure und/oder Terephthalsäure erhalten. Diese Polyester-Polyole können alleine oder in Kombination benutzt werden.

Geeignete Polyisocyanate sind aromatische, alicyclische or aliphatische Polyisocyanate, mit nicht weniger als zwei Isocyanat-Groupen und Mischungen davon. Bevorzugt sind aromatische Polyisocyanate wie Tolyldiisocyanat, Methylendiphenyldiisocyanat, Naphthylendiisocyanate, Xylylendiisocyanat, Tris-4-isocyanatophenyl)methan und Polymethylenpolyphenylendiisocyanate; alicyclische Polyisocyanate wie Methylendiphenyldiisocyanat, Tolyldiisocyanat; aliphatische Polyisocyanate und Hexamethylendiisocyanat, Isophorendiisocyanat, Demeryldiisocyanat, 1,1-Methylenbis(4-isocyanatocyclohexan-4,4'-Diisocyanatodicyclohexylmethan-Isomerengemisch, 1,4-Cyclohexyldiisocyanat, Desmodur^{®} -Typen (Bayer) und Lysindiisocyanat und Mischungen davon.

Geeignete Polyisocyanate sind modifizierte Produkte, die durch Reaktion von Polyisocyanat mit Polyol, Harnstoff, Carbodiimid und/oder Biuret erhalten werden.

Bevorzugt ist das Gewichtverhältnis des Polyisocyanats zu Polyol 170 zu 70 Gew.-Teile, vorzugsweise 130 zu 80 Gew.-Teile, bezogen auf 100 Gew.-Teile des Polyols.

Bevorzugt ist das Gewichtverhältnis des Katalysators 0,1 bis 4 Gew.-Teile, besonders bevorzugt 1 bis 2 Gew.-Teile bezogen auf 100 Gew.-Teile des Polyols.

Bevorzugte Blähmittel für Polyurethane sind Wasser, Kohlenwasserstoffe, Fluorchlorkohlenwasserstoff, Fluorokohlenwasserstoff etc. Die Menge des Blähmittels für Polyurethane ist 0,1 bis 1,8 Gew.-Teile, vorzugsweise 0,3 bis 1,6 Gew.-Teile und insbesondere 0,8 bis 1,6 Gew.-Teile bezogen auf 100 Gew.-Teile des Polyols.

Bevorzugt wird die Mischung in einer Formmasse eines Polyamides oder eines Polyesters verwendet. Geeignete Polyamide sind z. B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugte Polyamide sind Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Zusätzlich können Carbodiimide enthalten sein.

### Beispiele

### 1. Eingesetzte Komponenten

### Handelsübliche Polymere (Granulate):

Polyamid 6.6 (PA 6.6-GV): Ultramid^{®} A27 (Fa. BASF AG, D)
Polybutylenterephthalat (PBT): Ultradur^{®} B4500 (Fa. BASF AG, D)
Glasfasern:
   Vetrotex^{®} 983 EC 10 4,5 mm (Fa. Saint-Gobain-Vetrotex, D)
   Vetrotex^{®} 952 EC 10 4,5 mm (Fa. Saint-Gobain-Vetrotex, D)
Flammschutzmittel (Komponente A):
   Aluminiumsalz der Diethylphosphinsäure, als DEPAL bezeichnet
Flammschutzmittel (Komponente B, erfindungsgemäß):
   Aluminiumsalz der Monophenylphosphinsäure, als PHEPAL bezeichnet
Flammschutzmittel (Komponente B, zum Vergleich):
   Aluminiumsalz der Monoethylphosphinsäure, als EPAL bezeichnet
Synergist (Komponente C):
   Melaminpolyphosphat, als MPP bezeichnet, Melapur^{®} 200 (Fa. Ciba SC, CH) Melamincyanurat, als MC bezeichnet, Melapur^{®} MC50 (Fa. Ciba SC, CH) Melem: Delacal^{®} 420 (Fa. Delamin Ltd, UK)
Komponente D:
   Zinkborat Firebrake^{®} ZB und Firebrake^{®} 500, Fa. Borax, USA
Phosphonite (Komponente E):
   Sandostab^{®} P-EPQ, Fa. Clariant, D
Wachskomponenten (Komponente F):
   Licomont^{®} CaV 102, Clariant, D (Ca-Salz der Montanwachssäure) Licowax^{®} E, Fa. Clariant, D (Ester der Montanwachssäure)
   Herstellung, Verarbeitung und Prüfung von flammhemmenden Kunststoff-Formmassen

Die Komponenten A und B sowie ggf. C, D, E und/oder F wurden in dem in der Tabelle angegebenen Verhältnis vermischt und über den Seiteneinzug eines Doppelschnecken-Extruders (Typ Leistritz ZSE 27/44D) bei Temperaturen von 260 bis 310 °C in PA 6.6 bzw. bei 250 bis 275 °C in PBT eingearbeitet. Die Glasfasern wurden über einen zweiten Seiteneinzug zugegeben. Der homogenisierte Polymerstrang wurde abgezogen, im Wasserbad gekühlt und anschließend granuliert. Nach ausreichender Trocknung wurden die Formmassen auf einer Spritzgießmaschine (Typ Arburg 320 C Allrounder) bei Massetemperaturen von 250 bis 300 °C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende
V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0 V-2: Zündung der Watte durch brennendes Abtropfen, übrige Kriterien wie bei V-1 Nicht klassifizierbar (nkl): erfüllt nicht die Brandklasse V-2.

Die Fließfähigkeit der Formmassen wurde durch Ermittlung des Schmelzvolumenindex (MVR) bei 275 °C/2,16 kg bestimmt. Ein starker Anstieg des MVR-Wertes deutet auf einen Polymerabbau hin.

Sämtliche Versuche der jeweiligen Serie wurden aufgrund der Vergleichbarkeit unter identischen Bedingungen (Temperaturprogramme, Schneckengeometrien, Spritzgießparameter, etc.), durchgeführt.

Die Rezepturen V1 bis V-3 sind Vergleichsbeispiele in Polyamid 66 GF, in denen eine Flammschutzmittel-Kombination aus dem Aluminiumsalz der Diethylphosphinsäure (DEPAL) und dem stickstoffhaltigen Synergisten Melaminpolyphosphat (MPP) (Komponente C) und dem Metalloxid bzw. -borat (Komponente D) allein verwendet wurden.

Die Ergebnisse, in denen eine Flammschutzmittel-Mischung gemäß der Erfindung in Polyamid 66 GF eingesetzt wurde, sind in den Beispielen B1 bis B6 aufgelistet. Alle Mengen sind als Gew.% angegeben und beziehen sich auf die Kunststoff-Formmasse einschließlich der Flammschutzmittel-Kombination und Zusatzstoffen.

**Tabelle 1: PA 66 GF 30 Versuchsergebnisse. V1 bis V3 sind Vergleichsbeispiele, B1 bis B6 erfindungsgemäße Flammschutz-Mischungen**

| | V-1 | V-2 | V-3 | B-1 | B-2 | B-3 | B-4 | B-5 | B-6 |
|---|---|---|---|---|---|---|---|---|---|
| Polyamid 66 | 49,55 | 49,55 | 49,55 | 49,55 | 49,55 | 49,55 | 49,55 | 49,55 | 49,55 |
| Glasfasern 983 | 30 | 30 | 30 | 30 | 30 | 30 | 30 | 30 | 30 |
| A: DEPAL | 13 | 12 | 15 | 10 | 15 | 18 | 12 | 15 | 10 |
| B: PHEPAL | | | | 10 | 5 | 2 | 5 | 2 | 4 |
| B (Vergleich): EPAL | | | 5 | | | | | | |
| C: MPP | 7 | 7 | | | | | 3 | 3 | 5 |
| D1: Zinkborat | | 1 | | | | | | 1 | 1 |
| E: CaV 102 | 0,25 | 0,25 | 0,25 | 0,25 | 0,25 | 0,25 | 0,25 | 0,25 | 0,25 |
| F: P-EPQ | 0,20 | 0,20 | 0,20 | 0,20 | 0,20 | 0,20 | 0,20 | 0,20 | 0,20 |
| UL 94 0,8 mm | V-0 | V-0 | V-0 | V-1 | V-0 | V-1 | v-0 | V-0 | V-0 |
| MVR 275°C/2,16kg | 19 | 12 | 5 | 4 | 3 | 5 | 8 | 6 | 7 |
| Polymerstrang | rauh | glatt | rauh | glatt | glatt | glatt | glatt | glatt | glatt |
| Ausblühungen* | stark | deutlich | gering | gering | keine | keine | gering | keine | gering |
| Farbe | grau | weiß | weiß | weiß | weiß | weiß | weiß | weiß | weiß |
| Schlagzähigkeit [kJ/m²] | 61 | 61 | 62 | 59 | 64 | 66 | 63 | 61 | 60 |
| Kerbschlagzähigkeit [kJ/m²] | 15 | 16 | 11 | 10 | 14 | 14 | 14 | 15 | 12 |

| | | | | | | | | | |
|---|---|---|---|---|---|---|---|---|---|
| * 14 Tage 100 % Feuchte 70 °C | | | | | | | | | |

Aus den Beispielen geht hervor, dass die erfindungsgemäße Mischung aus den Komponenten DEPAL und PHEPAL im Vergleich zu einer Mischung aus DEPAL und MPP bzw. DEPAL, MPP und Zinkborat geringere Schmelzindices (weniger Polymerabbau) und keine Ausblühungen bei feucht-warm Lagerung zeigt.

Im Vergleich zu DEPAL/EPAL (V3) wird ein glatter Polymerstrang beobachtet und es werden keine Ausblühungen mehr gefunden.

Die Einarbeitung der Flammschutzmittel DEPAL und MPP in PA 6.6 führt zwar zu UL 94 V-0, aber auch zu einer Grau-Verfärbung der Formmassen, Ausblühungen und hohen Schmelzindizes (V1). Durch die Zugabe von Zinkborat kann die Grau-Verfärbung verhindert werden und die Ausblühungen gehen deutlich zurück (V2).

Wird nun eine erfindungsgemäße Flammschutzmittel-Kombination aus DEPAL, PHEPAL, ggf. Stickstoffsynergist, Borat oder Hydrotalcit sowie Gleitmittel und Stabilisator (B1-B3) eingesetzt, so resultiert neben der Flammwidrigkeit auch keine Verfärbung, keine Ausblühungen, geringe Schmelzindices und gute mechanische Eigenschaften. Am geringen Schmelzindex (MVR) ist zu erkennen, dass es nicht zu Polymerabbau kommt.

**Tabelle 2: PBT GF 25 Versuchsergebnisse. V4 bis V6 sind Vergleichsbeispiele, B7 bis B9 erfindungsgemäße Flammschutz-Stabilisator-Mischung**

| | V-4 | V-5 | V-6 | B-7 | B-8 | B-9 |
|---|---|---|---|---|---|---|
| PBT | 49,55 | 49,55 | 49,55 | 49,55 | 49,55 | 49,55 |
| Glasfasern 952 | 25 | 25 | 25 | 25 | 25 | 25 |
| A: DEPAL | 13,3 | 12 | 15 | 15 | 12 | 12 |
| B: PHEPAL | | | | 5 | 5 | 5 |
| B (Vergleich): EPAL | | | 5 | | | |
| C1: MC | 7 | 4 | | | 3 | |
| C2: MPP | | 3 | | | | 2 |
| C3: Melem | | | | | | 1 |
| E: Licowax E | 0,25 | 0,25 | 0,25 | 0,25 | 0,25 | 0,25 |
| F: P-EPQ | 0,20 | 0,20 | 0,20 | 0,20 | 0,20 | 0,20 |
| UL 94 0,8 mm | V-1 | V-0 | V-0 | v-0 | V-0 | V-0 |
| Farbe | weiß | weiß | gelblich | Weiß | Weiß | weiß |
| Löseviskosität SV* | 1185 | 1210 | 1380 | 1387 | 1368 | 1350 |
| Bruchdehnung [%] | 2,1 | 2,2 | 2,4 | 2,4 | 2,4 | 2,4 |
| Schlagzähigkeit [kJ/m²] | 40 | 41 | 49 | 49 | 49 | 48 |
| Kerbschlagzähigkeit [kJ/m²] | 6,3 | 6,6 | 6,2 | 7,8 | 7,6 | 7,7 |

| | | | | | | |
|---|---|---|---|---|---|---|
| * in Dichloressigsäure, reines PBT (uncompoundiert) hat 1450 | | | | | | |

Die Einarbeitung von DEPAL und MC bzw. MC+MPP (Beispiele V4 und V5) führt zu einem deutlichen Polymerabbau, erkenntlich an den niedrigen Löseviskositäten. Auch die mechanischen Werte sind im Vergleich zu nicht flammgeschütztem PBT niedrig. Durch die (nicht erfindungsgemäße) Kombination von DEPAL mit EPAL und den weiteren Additiven wird zwar der Polymerabbau nahezu vollständig unterdrückt, es wird die Brandklasse V-0 erreicht, die mechanischen Werte werden verbessert, aber es wird eine deutliche Gelbverfärbung beobachtet.

Durch die erfindungsgemäße Kombination von DEPAL mit PHEPAL und ggf. Stickstoffsynergisten (Beispiele B7 bis B9) werden UL 94 V-0, gute mechanische Werte, kein Polymerabbau und keine Verfärbung erreicht.

## Patentansprüche

1. Flammschutzmittel-Stabilisator-Kombination, enthaltend als Komponente A 40 bis 99 Gew.-% eines Phosphinsäuresalzes der Formel (I) und/oder eines Diphosphinsäuresalzes der Formel (II) und/oder deren Polymere, 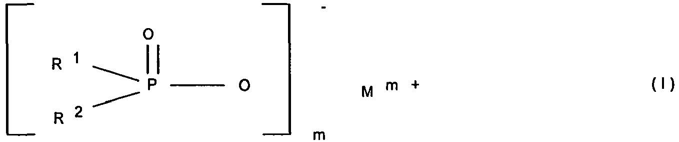 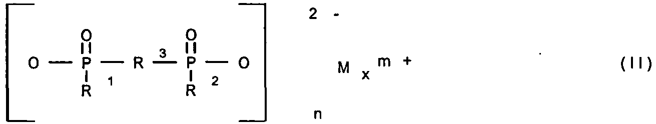 worin
R¹, R² gleich oder verschieden sind und C₁-C₁₈-Alkyl linear, verzweigt oder cyclisch, C₆-C₁₈-Aryl, C₇-C₁₈-Arylalkyl und/oder C₇-C₁₈-Alkylaryl
R³ C₁-C₁₀-Alkylen, linear oder verzweigt, C₆-C₁₀-Arylen, C₇-C₁₈-Alkylarylen oder C₇-C₁₈-Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4 bedeuten,
als Komponente B 1 bis 60 Gew.-% eines Phosphinsäuresalzes der allgemeinen Formel (III) 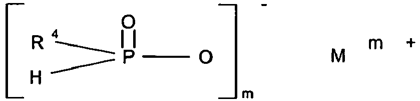 worin
R⁴ C₁-C₁₈-Alkyl linear, verzweigt oder cyclisch, C₆-C₁₈-Aryl, C₇-C₁₈-Arylalkyl oder C₇-C₁₈-Alkylaryl und
M Mg, Ca, AI, Sb, Sn, Ge, Ti, Zn, Fe, Zr, Ce, Bi, Sr, Mn, Li, Na, K und/oder eine protonierte Stickstoffbase bedeuten,
als Komponente C 0 bis 50 Gew.-% eines stickstoffhaltigen Synergisten und/oder eines Phosphor/Stickstoff Flammschutzmittels,
als Komponente D 0 bis 10 Gew.-% eines Zinksalzes und/oder eines basischen oder amphoteren Oxides, Hydroxides, Carbonates, Silikates, Borates, Stannates,
gemischten Oxid-Hydroxides, Oxid-Hydroxid-Carbonates, Hydroxid-Silikates und/oder Hydroxid-Borates und/oder Mischungen dieser Stoffe,
als Komponente E 0 bis 10 Gew. % Phosphonit oder Phosphonit/Phosphit-Gemisch und als Komponente F 0 bis 10 Gew.% Ester und/oder Salze von langkettigen Fettsäuren mit 14 bis 40 C-Atomen, wobei die Summe der Komponenten immer 100 Gew.-% beträgt,
mit der Maßgabe, dass wenn R⁴ C₁-C₁₈-Alkyl bedeutet, dass dann mindestens eine der Gruppen R¹ und/oder R² C₆-C₁₈-Aryl, C₇-C₁₈-Arylalkyl und/oder C₇-C₁₈-Alkylaryl bedeutet.

2. Flammschutzmittel-Stabilisator-Kombination nach Anspruch 1, **dadurch gekennzeichnet, dass** R¹, R² gleich oder verschieden sind und C₁-C₁₈-Alkyl linear, verzweigt oder cyclisch bedeuten und R⁴ C₆-C₁₈-Aryl, C₇-C₁₈-Arylalkyl oder C₇-C₁₈-Alkylaryl bedeutet.

3. Flammschutzmittel-Stabilisator-Kombination nach Anspruch 1, **dadurch gekennzeichnet, dass** mindestens eine der Gruppen R¹ und/oder R² C₆-C₁₈-Aryl, C₇-C₁₈-Arylalkyl und/oder C₇-C₁₈-Alkylaryl bedeutet und R⁴ C₁-C₁₈-Alkyl bedeutet.

4. Flammschutzmittel-Stabilisator-Kombination nach Anspruch 1, **dadurch gekennzeichnet, dass** mindestens eine der Gruppen R¹ und/oder R² C₆-C₁₈-Aryl, C₇-C₁₈-Arylalkyl und/oder C₇-C₁₈-Alkylaryl bedeutet und R⁴ C₆-C₁₈-Aryl, C₇-C₁₈-Arylalkyl oder C₇-C₁₈-Alkylaryl bedeutet.

5. Flammschutzmittel-Stabilisator-Kombination nach Anspruch 2, **dadurch gekennzeichnet, dass** R¹, R² gleich oder verschieden sind und Methyl, Ethyl, n-Propyl, iso-Propyl, n-Butyl, tert.-Butyl und/oder n-Pentyl bedeuten und R⁴ Phenyl, Naphtyl oder ein mono-, di- oder tri-Methylsubstituertes Phenyl bedeuten.

6. Flammschutzmittel-Stabilisator-Kombination nach Anspruch 3, **dadurch gekennzeichnet, dass** R¹ Methyl, Ethyl, n-Propyl, iso-Propyl, n-Butyl, tert.-Butyl oder n-Pentyl und R² Phenyl, Naphtyl oder ein mono-, di- oder tri-Methylsubstituertes Phenyl bedeutet oder R² Methyl, Ethyl, n-Propyl, iso-Propyl, n-Butyl, tert.-Butyl oder n-Pentyl und R¹ Phenyl , Naphtyl oder ein mono-, di- oder tri-Methylsubstituertes Phenyl bedeutet und R⁴ Methyl, Ethyl, n-Propyl, iso-Propyl, n-Butyl, tert.-Butyl und/oder n-Pentyl bedeutet.

7. Flammschutzmittel-Stabilisator-Kombination nach Anspruch 4, **dadurch gekennzeichnet, dass** R¹ Methyl, Ethyl, n-Propyl, iso-Propyl, n-Butyl, tert.-Butyl oder n-Pentyl und R² Phenyl, Naphtyl oder ein mono-, di- oder tri-Methylsubstituertes Phenyl bedeutet oder R² Methyl, Ethyl, n-Propyl, iso-Propyl, n-Butyl, tert.-Butyl oder n-Pentyl und R¹ Phenyl , Naphtyl oder ein mono-, di- oder tri-Methylsubstituertes Phenyl bedeutet und R⁴ Phenyl, Naphtyl oder ein mono-, di- oder tri-Methylsubstituertes Phenyl bedeutet

8. Flammschutzmittel-Stabilisator-Kombination nach einem oder mehreren der Ansprüche 1 bis 7, **dadurch gekennzeichnet, dass** sie 75 bis 95 Gew.-% Komponente A und 5 bis 25 Gew.-% Komponente B enthält.

9. Flammschutzmittel-Stabilisator-Kombination nach einem oder mehreren der Ansprüche 1 bis 8, **dadurch gekennzeichnet, dass** es sich bei der Komponente C um Kondensationsprodukte des Melamins und/oder um Umsetzungsprodukte von Melamin mit Polyphosphorsäure und/oder um Umsetzungsprodukte von Kondensationsprodukten des Melamins mit Polyphosphorsäure oder Gemische davon handelt.

10. Flammschutzmittel-Stabilisator-Kombination nach Anspruch 9, **dadurch gekennzeichnet, dass** es sich bei der Komponente C um Melem, Melam, Melon und/oder höherkondensierte Verbindungen davon und/oder um Dimelaminpyrophosphat, Melaminpolyphosphat, Melempolyphosphat, Melampolyphosphat, Melonpolyphosphat und/oder gemischte Polysalze dieses Typs handelt.

11. Flammschutzmittel-Stabilisator-Kombination nach einem oder mehreren der Ansprüche 1 bis 8, **dadurch gekennzeichnet, dass** es sich bei der Komponente C um stickstoffhaltige Phosphate der Formeln (NH₄)_{y} H_{3-y} PO₄ bzw. (NH₄ PO₃)_{z}, mit y gleich 1 bis 3 und z gleich 1 bis 10.000, handelt.

12. Flammschutzmittel-Stabilisator-Kombination nach Anspruch 11, **dadurch gekennzeichnet, dass** es sich bei der Komponente C um Ammoniumhydrogenphosphat, Ammoniumdihydrogenphosphat und/oder Ammoniumpolyphosphat handelt.

13. Flammschutzmittel-Stabilisator-Kombination nach einem oder mehreren der Ansprüche 1 bis 8, **dadurch gekennzeichnet, dass** es sich bei der Komponente C um Benzoguanamin, Tris(hydroxyethyl)isocyanurat, Allantoin, Glycouril, Melamin, Melamincyanurat, Dicyandiamid und/oder Guanidin handelt.

14. Flammschutzmittel-Stabilisator-Kombination nach einem oder mehreren der Ansprüche 1 bis 13, **dadurch gekennzeichnet, dass** es sich bei der Komponente D um Magnesiumoxid, Calciumoxid, Aluminiumoxid, Zinkoxid, Manganoxid, Zinnoxid, Aluminiumhydroxid, Böhmit, Dihydrotalcit, Hydrocalumit, Magnesiumhydroxid, Calciumhydroxid, Zinkhydroxid, Zinnoxidhydrat, Manganhydroxid, Zinkborat, basisches Zink-Silikat und/oder Zinkstannat handelt.

15. Flammschutzmittel-Stabilisator-Kombination nach einem oder mehreren der Ansprüche 1 bis 14, **dadurch gekennzeichnet, dass** es sich bei der Komponente E um Phosphonite der allgemeinen Struktur
R-[P(OR₁)₂]ₘ (IV)
handelt, wobei
R ein ein- oder mehrwertiger aliphatischer, aromatischer oder heteroaromatischer organischer Rest ist und
R₁ eine Verbindung der Struktur (V) 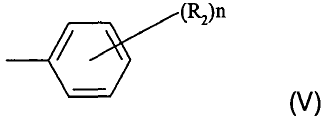 ist oder die beiden Reste R₁ eine verbrückende Gruppe der Struktur (VI) bilden 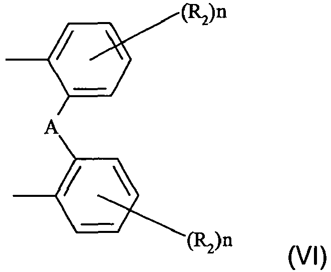 mit
A direkter Bindung, O, S, C₁₋₁₈-Alkylen (linear oder verzweigt), C₁₋₁₈-Alkyliden (linear oder verzweigt), in denen
R₂ unabhängig voneinander C₁₋₁₂-Alkyl (linear oder verzweigt), C₁₋₁₂-Alkoxy, C₅₋₁₂-Cycloalkyl bedeuten und
n 0 bis 5 sowie m 1 bis 4 bedeutet.

16. Flammschutzmittel-Stabilisator-Kombination nach einem oder mehreren der Ansprüche 1 bis 15, **dadurch gekennzeichnet, dass** es sich bei der Komponente F um Umsetzungsprodukte von langkettigen Fettsäuren mit 14 bis 40 C-Atomen mit mehrwertigen Alkoholen, wie Ethylenglykol, Glycerin, Trimethylolpropan und/oder Pentaerythrit handelt und/oder um Alkali-, Erdalkali-, Aluminium- und/oder Zinksalze von langkettigen Fettsäuren mit 14 bis 40 C-Atomen handelt.

17. Flammfest ausgerüstete Kunststoff-Formmasse, enthaltend eine Flammschutzmittel-Stabilisator-Kombination gemäß einem oder mehreren der Ansprüche 1 bis 16, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

18. Flammfest ausgerüstete Kunststoff-Formmasse nach Anspruch 17, **dadurch gekennzeichnet, dass** sie 50 bis 98 Gew.-% Kunststoff-Formmasse und 2 bis 50 Gew.-% der Flammschutzmittel-Stabilisator-Kombination gemäß einem oder mehreren der Ansprüche 1 bis 16 enthält.

19. Polymer-Formkörper, -Filme, -Fäden und -Fasern enthaltend eine Flammschutzmittel-Stabilisator-Kombination gemäß einem oder mehreren der Ansprüche 1 bis 16, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol), Polyamid, Polyester und/oder ABS handelt und dass sie 50 bis 98 Gew.-% Polymer-Formkörper, -Filme, -Fäden und/oder -Fasern und 2 bis 50 Gew.-% der Flammschutzmittel-Stabilisator-Kombination gemäß einem oder mehreren der Ansprüche 1 bis 16 enthält.

## Claims

1. A flame retardant-stabilizer combination comprising as component A 40 to 99% by weight of a phosphinic salt of the formula (I) and/or of a diphosphinic salt of the formula (II) and/or polymers thereof 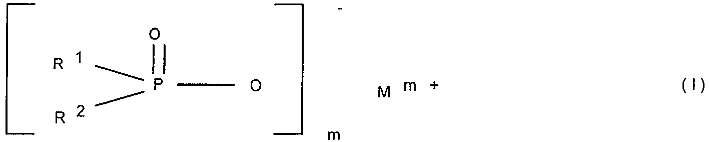 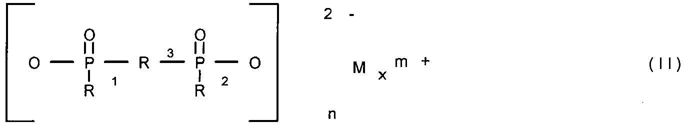 in which
R¹, R² are the same or different and are each linear, branched or cyclic C₁-C₁₈-alkyl, C₆-C₁₈-aryl, C₇-C₁₈-arylalkyl and/or C₇-C₁₈-alkylaryl;
R³ is linear or branched C₁-C₁₀-alkylene, C₆-C₁₀-arylene, C₇-C₁₈-alkylarylene or C₇-C₁₈-arylalkylene;
M is Mg, Ca, Al, Sb, Sn, Ge, Ti, Zn, Fe, Zr, Ce, Bi, Sr, Mn, Li, Na, K and/or a protonated nitrogen base;
m is 1 to 4;
n is 1 to 4;
x is 1 to 4,
as component B 1 to 60% by weight of a phosphinic salt of the formula (III) 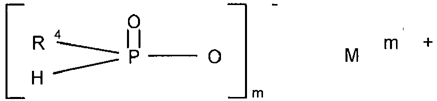 in which
R⁴ is linear, branched or cyclic C₁-C₁₈-alkyl, C₆-C₁₈-aryl, C₇-C₁₈-arylalkyl or C₇-C₁₈-alkylaryl and
M is Mg, Ca, Al, Sb, Sn, Ge, Ti, Zn, Fe, Zr, Ce, Bi, Sr, Mn, Li, Na, K and/or a protonated nitrogen base;
as component C 0 to 50% by weight of a nitrogen-containing synergist and/or of a phosphorus/nitrogen flame retardant,
as component D 0 to 10% by weight of a zinc salt and/or of a basic or amphoteric oxide, hydroxide, carbonate, silicate, borate, stannate, mixed oxide-hydroxide, oxide-hydroxide-carbonate, hydroxide-silicate and/or hydroxide-borate and/or mixtures of these substances,
as component E 0 to 10% by weight of phosphonite or phosphonite/phosphite mixture, and as component F 0 to 10% by weight of esters and/or salts of long-chain fatty acids having 14 to 40 carbon atoms, where the sum of the components is always 100% by weight,
with the proviso that, when R⁴ is C₁-C₁₈-alkyl, at least one of the R¹ and/or R² groups is C₆-C₁₈-aryl, C₇-C₁₈-arylalkyl and/or C₇-C₁₈-alkylaryl.

2. The flame retardant-stabilizer combination as claimed in claim 1, wherein R¹, R² are the same or different and are each linear, branched or cyclic C₁-C₁₈-alkyl and R⁴ is C₆-C₁₈-aryl, C₇-C₁₈-arylalkyl or C₇-C₁₈-alkylaryl.

3. The flame retardant-stabilizer combination as claimed in claim 1, wherein at least one of the R¹ and/or R² groups is C₆-C₁₈-aryl, C₇-C₁₈-arylalkyl and/or C₇-C₁₈-alkylaryl and R⁴ is C₁-C₁₈-alkyl.

4. The flame retardant-stabilizer combination as claimed in claim 1, wherein at least one of the R¹ and/or R² groups is C₆-C₁₈-aryl, C₇-C₁₈-arylalkyl and/or C₇-C₁₈-alkylaryl and R⁴ is C₆-C₁₈-aryl, C₇-C₁₈-arylalkyl or C₇-C₁₈-alkylaryl.

5. The flame retardant-stabilizer combination as claimed in claim 2, wherein R¹, R² are the same or different and are each methyl, ethyl, n-propyl, isopropyl, n-butyl, tert-butyl and/or n-pentyl and R⁴ is phenyl, naphthyl or a mono-, di- or tri-methyl-substituted phenyl.

6. The flame retardant-stabilizer combination as claimed in claim 3, wherein R¹ is methyl, ethyl, n-propyl, isopropyl, n-butyl, tert-butyl or n-pentyl and R² is phenyl, naphthyl or a mono-, di- or tri-methyl-substituted phenyl or R² is methyl, ethyl, n-propyl, isopropyl, n-butyl, tert-butyl or n-pentyl and R¹ is phenyl, naphthyl or a mono-, di- or tri-methyl-substituted phenyl and R⁴ is methyl, ethyl, n-propyl, isopropyl, n-butyl, tert-butyl and/or n-pentyl.

7. The flame retardant-stabilizer combination as claimed in claim 4, wherein R¹ is methyl, ethyl, n-propyl, isopropyl, n-butyl, tert-butyl or n-pentyl and R² is phenyl, naphthyl or a mono-, di- or tri-methyl-substituted phenyl or R² is methyl, ethyl, n-propyl, isopropyl, n-butyl, tert-butyl or n-pentyl and R¹ is phenyl, naphthyl or a mono-, di- or tri-methyl-substituted phenyl and R⁴ is phenyl, naphthyl or a mono-, di-or tri-methyl-substituted phenyl.

8. The flame retardant-stabilizer combination as claimed in one or more of claims 1 to 7, which comprises 75 to 95% by weight of component A and 5 to 25% by weight of component B.

9. The flame retardant-stabilizer combination as claimed in one or more of claims 1 to 8, wherein component C comprises condensation products of melamine and/or reaction products of melamine with polyphosphoric acid and/or reaction products of condensation products of melamine with polyphosphoric acid or mixtures thereof.

10. The flame retardant-stabilizer combination as claimed in claim 9, wherein component C comprises melem, melam, melon and/or more highly condensed compounds thereof and/or dimelamine pyrophosphate, melamine polyphosphate, melem polyphosphate, melam polyphosphate, melon polyphosphate and/or mixed poly salts of this type.

11. The flame retardant-stabilizer combination as claimed in one or more of claims 1 to 8, wherein component C comprises nitrogen-containing phosphates of the formulae (NH₄)_{y} H_{3-y} PO₄ and (NH₄ PO₃)_{z}, where y is 1 to 3 and z is 1 to 10 000.

12. The flame retardant-stabilizer combination as claimed in claim 11, wherein component C comprises ammonium hydrogenphosphate, ammonium dihydrogenphosphate and/or ammonium polyphosphate.

13. The flame retardant-stabilizer combination as claimed in one or more of claims 1 to 8, wherein component C comprises benzoguanamine, tris(hydroxyethyl) isocyanurate, allantoin, glycoluril, melamine, melamine cyanurate, dicyandiamide and/or guanidine.

14. The flame retardant-stabilizer combination as claimed in one or more of claims 1 to 13, wherein component D comprises magnesium oxide, calcium oxide, aluminum oxide, zinc oxide, manganese oxide, tin oxide, aluminum hydroxide, boehmite, dihydrotalcite, hydrocalumite, magnesium hydroxide, calcium hydroxide, zinc hydroxide, tin oxide hydrate, manganese hydroxide, zinc borate, basic zinc silicate and/or zinc stannate.

15. The flame retardant-stabilizer combination as claimed in one or more of claims 1 to 14, wherein component E comprises phosphonites of the structure
R-[P(OR₁)₂]m (IV)
where
R is a mono- or polyvalent aliphatic, aromatic or heteroaromatic organic radical and
R₁ is a compound of the structure (V) 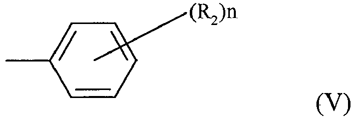
or the two R₁ radicals form a bridging group of the structure (VI) 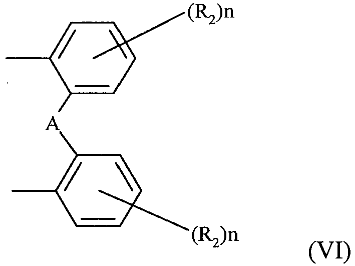 where
A is a direct bond, O, S, C₁₋₁₈-alkylene (linear or branched), C₁₋₁₈-alkylidene (linear or branched), in which
R₂ is independently C₁₋₁₂-alkyl (linear or branched), C₁₋₁₂-alkoxy, C₅₋₁₂-cycloalkyl and
n is 0 to 5 and m is 1 to 4.

16. The flame retardant-stabilizer combination as claimed in one or more of claims 1 to 15, wherein component F comprises reaction products of long-chain fatty acids having 14 to 40 carbon atoms with polyhydric alcohols such as ethylene glycol, glycerol, trimethylolpropane and/or pentaerythritol, and/or alkali metal, alkaline earth metal, aluminum and/or zinc salts of long-chain fatty acids having 14 to 40 carbon atoms.

17. A flame-retardant polymer molding composition comprising a flame retardant-stabilizer combination as claimed in one or more of claims 1 to 16, wherein the polymer comprises thermoplastic polymers of the HI (high-impact) polystyrene, polyphenylene ether, polyamide, polyester or polycarbonate type, and blends or polymer blends of the ABS (acrylonitrile-butadiene-styrene) or PC/ABS (polycarbonate/acrylonitrile-butadiene-styrene) or PPE/HIPS (polyphenylene ether/HI polystyrene) polymer type.

18. The flame-retardant polymer molding composition as claimed in claim 17, which comprises 50 to 98% by weight of polymer molding composition and 2 to 50% by weight of the flame retardant-stabilizer combination as claimed in one or more of claims 1 to 16.

19. A polymer molding, film, filament or fiber comprising a flame retardant-stabilizer combination as claimed in one or more of claims 1 to 16, wherein the polymer comprises HI (high-impact) polystyrene, polyphenylene ethers, polyamides, polyesters, polycarbonates and blends or polymer blends of the ABS (acrylonitrile-butadiene-styrene) or PC/ABS (polycarbonate/acrylonitrile-butadiene-styrene), polyamide, polyester and/or ABS type, and which comprises 50 to 98% by weight of polymer molding, film, filament and/or fiber and 2 to 50% by weight of the flame retardant-stabilizer combination as claimed in one or more of claims 1 to 16.

## Revendications

1. Combinaison agent ignifuge-stabilisateur, contenant en tant que composant A 40 à 99 % en poids d'un sel de l'acide phosphinique de formule (I) et/ou d'un sel de l'acide diphosphinique de formule (II) et/ou leurs polymères 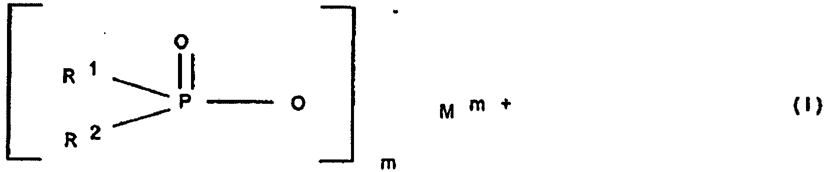 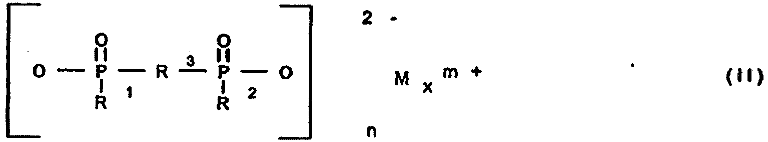 dans lesquelles
R¹, R² sont identiques ou différents, et signifient alkyle en C₁-C₁₈ linéaire, ramifié ou cyclique, aryle en C₆-C₁₈, arylalkyle en C₇-C₁₈ et/ou alkylaryle en C₇-C₁₈,
R³ signifie alkylène en C₁-C₁₀ linéaire ou ramifié, arylène en C₆-C₁₀, alkylarylène en C₇-C₁₈ ou arylalkylène en C₇-C₁₈ ;
M signifie Mg, Ca, Al, Sb, Sn, Ge, Ti, Zn, Fe, Zr, Ce, Bi, Sr, Mn, Li, Na, K et/ou une base azotée protonée ;
m signifie 1 à 4 ;
n signifie 1 à 4 ;
x signifie 1 à 4,
en tant que composant B, 1 à 60 % en poids d'un sel de l'acide phosphinique de formule générale (III) 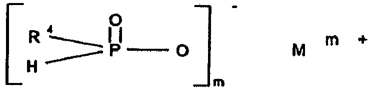 dans laquelle
R⁴ signifie alkyle en C₁-C₁₈, linéaire, ramifié ou cyclique, aryle en C₆-C₁₈, arylalkyle en C₇-C₁₈ ou alkylaryle en C₇-C₁₈, et
M signifie Mg, Ca, Al, Sb, Sn, Ge, Ti, Zn, Fe, Zr, Ce, Bi, Sr, Mn, Li, Na, K et/ou une base azotée protonée ;
en tant que composant C, 0 à 50 % en poids d'un synergiste contenant de l'azote et/ou d'un agent ignifuge phosphore/azote,
en tant que composant D, 0 à 10 % en poids d'un sel de zinc et/ou d'un oxyde, hydroxyde, carbonate, silicate, borate, stannate, oxyde-hydroxyde mixte, oxyde-hydroxyde-carbonate, hydroxyde-silicate et/ou hydroxyde-borate basique ou amphotère et/ou des mélanges de ces substances,
en tant que composant E, 0 à 10 % en poids d'une phosphonite ou d'un mélange phosphonite/phosphite, et en tant que composant F, 0 à 10 % en poids d'esters et/ou de sels d'acides gras à chaîne longue de 14 à 40 atomes C, la somme des composants étant toujours de 100 % en poids,
à condition que lorsque R⁴ signifie alkyle en C₁-C₁₈, au moins un des groupes R¹ et/ou R² signifie aryle en C₆-C₁₈, arylalkyle en C₇-C₁₈ et/ou alkylaryle en C₇-C₁₈.

2. Combinaison agent ignifuge-stabilisateur selon la revendication 1, **caractérisée en ce que** R¹, R² sont identiques ou différents, et signifient alkyle en C₁-C₁₈ linéaire, ramifié ou cyclique, et R⁴ signifie aryle en C₆-C₁₈, arylalkyle en C₇-C₁₈ ou alkylaryle en C₇-C₁₈.

3. Combinaison agent ignifuge-stabilisateur selon la revendication 1, **caractérisée en ce qu'**au moins un des groupes R¹ et/ou R² signifie aryle en C₆-C₁₈, arylalkyle en C₇-C₁₈ et/ou alkylaryle en C₇-C₁₈, et R⁴ signifie alkyle en C₁-C₁₈.

4. Combinaison agent ignifuge-stabilisateur selon la revendication 1, **caractérisée en ce qu'**au moins un des groupes R¹ et/ou R² signifie aryle en C₆-C₁₈, arylalkyle en C₇-C₁₈ et/ou alkylaryle en C₇-C₁₈, et R⁴ signifie aryle en C₆-C₁₈, arylalkyle en C₇-C₁₈ ou alkylaryle en C₇-C₁₈.

5. Combinaison agent ignifuge-stabilisateur selon la revendication 2, **caractérisée en ce que** R¹, R² sont identiques ou différents, et signifient méthyle, éthyle, n-propyle, isopropyle, n-butyle, tert.-butyle et/ou n-pentyle, et R⁴ signifie phényle, naphtyle ou un phényle à substitution mono-, di- ou triméthyle.

6. Combinaison agent ignifuge-stabilisateur selon la revendication 3, **caractérisée en ce que** R¹ signifie méthyle, éthyle, n-propyle, isopropyle, n-butyle, tert.-butyle ou n-pentyle, et R² signifie phényle, naphtyle ou un phényle à substitution mono-, di- ou triméthyle, ou R² signifie méthyle, éthyle, n-propyle, isopropyle, n-butyle, tert.-butyle ou n-pentyle, et R¹ signifie phényle, naphtyle ou un phényle à substitution mono-, di- ou triméthyle, et R⁴ signifie méthyle, éthyle, n-propyle, isopropyle, n-butyle, tert.-butyle et/ou n-pentyle.

7. Combinaison agent ignifuge-stabilisateur selon la revendication 4, **caractérisée en ce que** R¹ signifie méthyle, éthyle, n-propyle, isopropyle, n-butyle, tert.-butyle ou n-pentyle, et R² signifie phényle, naphtyle ou un phényle à substitution mono-, di- ou triméthyle, ou R² signifie méthyle, éthyle, n-propyle, isopropyle, n-butyle, tert.-butyle ou n-pentyle, et R¹ signifie phényle, naphtyle ou un phényle à substitution mono-, di- ou triméthyle, et R⁴ signifie phényle, naphtyle ou un phényle à substitution mono-, di- ou triméthyle.

8. Combinaison agent ignifuge-stabilisateur selon une ou plusieurs des revendications 1 à 7, **caractérisée en ce qu'**elle contient 75 à 95 % en poids du composant A et 5 à 25 % en poids du composant B.

9. Combinaison agent ignifuge-stabilisateur selon une ou plusieurs des revendications 1 à 8, **caractérisée en ce que** le composant C consiste en des produits de condensation de mélamine et/ou des produits de réaction de mélamine avec de l'acide polyphosphorique et/ou des produits de réaction de produits de condensation de mélamine avec de l'acide polyphosphorique ou leurs mélanges.

10. Combinaison agent ignifuge-stabilisateur selon la revendication 9, **caractérisée en ce que** le composant C consiste en le mélem, le mélam, le melon et/ou leurs composés condensés supérieurs et/ou le pyrophosphate de dimélamine, le polyphosphate de mélamine, le polyphosphate de mélem, le polyphosphate de mélam, le polyphosphate de melon, et/ou les polysels mixtes de ce type.

11. Combinaison agent ignifuge-stabilisateur selon une ou plusieurs des revendications 1 à 8, **caractérisée en ce que** le composant C consiste en des phosphates azotés de formule (NH₄)_{y}H_{3-y}PO₄ ou (NH₄PO₃)_{z}, avec y = 1 à 3 et z = 1 à 10 000.

12. Combinaison agent ignifuge-stabilisateur selon la revendication 11, **caractérisée en ce que** le composant C est l'hydrogénophosphate d'ammonium, le dihydrogénophosphate d'ammonium et/ou le polyphosphate d'ammonium.

13. Combinaison agent ignifuge-stabilisateur selon une ou plusieurs des revendications 1 à 8, **caractérisée en ce que** le composant C est la benzoguanamine, l'isocyanurate de tris(hydroxyéthyle), l'allantoïne, le glycourile, la mélamine, le cyanurate de mélamine, le dicyandiamide et/ou la guanidine.

14. Combinaison agent ignifuge-stabilisateur selon une ou plusieurs des revendications 1 à 13, **caractérisée en ce que** le composant D est l'oxyde de magnésium, l'oxyde de calcium, l'oxyde d'aluminium, l'oxyde de zinc, l'oxyde de manganèse, l'oxyde d'étain, l'hydroxyde d'aluminium, la boehmite, le dihydrotalcite, l'hydrocalumite, l'hydroxyde de magnésium, l'hydroxyde de calcium, l'hydroxyde de zinc, l'oxyde d'étain hydraté, l'hydroxyde de manganèse, le borate de zinc, le silicate de zinc basique et/ou le stannate de zinc.

15. Combinaison agent ignifuge-stabilisateur selon une ou plusieurs des revendications 1 à 14, **caractérisée en ce que** le composant E consiste en des phosphonites de structure générale
R-[P(OR₁)₂]ₘ (IV)
dans laquelle
R est un radical organique mono- ou polyvalent aliphatique, aromatique ou hétéroaromatique, et
R₁ est un composé de structure (V) 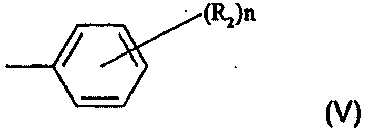
ou les deux radicaux R₁ forment un groupe pontant de structure (VI) 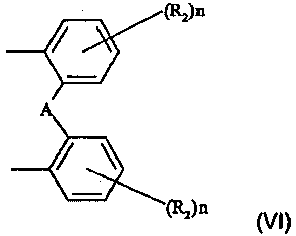 dans laquelle
A signifie une liaison directe, O, S, alkylène en C₁₋₁₈ (linéaire ou ramifié), alkylidène en C₁₋₁₈ (linéaire ou ramifié),
les R₂ signifient indépendamment les uns des autres alkyle en C₁₋₁₂ (linéaire ou ramifié), alcoxy en C₁₋₁₂, cycloalkyle en C₅₋₁₂, et
n signifie 0 à 5, et m signifie 1 à 4.

16. Combinaison agent ignifuge-stabilisateur selon une ou plusieurs des revendications 1 à 15, **caractérisée en ce que** le composant F consiste en des produits de réaction d'acides gras à chaîne logue de 14 à 40 atomes C avec des alcools polyvalents, tels que l'éthylène glycol, la glycérine, le triméthylolpropane et/ou la pentaérythrite, et/ou en des sels d'alcalis, d'alcalino-terreux, d'aluminium et/ou de zinc d'acides gras à chaîne longue de 14 à 40 atomes C.

17. Matériau de moulage en plastique ignifugé, contenant une combinaison agent ignifuge-stabilisateur selon une ou plusieurs des revendications 1 à 16, **caractérisé en ce que** le plastique consiste en des polymères thermoplastiques de type polystyrène HI (High Impact), éther de polyphénylène, polyamides, polyesters, polycarbonates et alliages ou alliages polymères de type ABS (acrylonitrile-butadiène-styrène) ou PC/ABS (polycarbonate/acrylonitrile-butadiène-styrène) ou PPE/HIPS (éther de polyphénylène/polystyrène HI).

18. Matériau de moulage en plastique ignifugé selon la revendication 17, **caractérisé en ce qu'**il contient 50 à 98 % en poids de matériau de moulage en plastique et 2 à 50 % en poids de la combinaison agent ignifuge-stabilisateur selon une ou plusieurs des revendications 1 à 16.

19. Corps moulés, films, fils et fibres polymères contenant une combinaison agent ignifuge-stabilisateur selon une ou plusieurs des revendications 1 à 16, **caractérisés en ce que** le polymère consiste en le polystyrène HI (High Impact), l'éther de polyphénylène, les polyamides, les polyesters, les polycarbonates et les alliages ou les alliages polymères de type ABS (acrylonitrile-butadiène-styrène) ou PC/ABS (polycarbonate/acrylonitrile-butadiène-styrène), le polyamide, le polyester et/ou l'ABS, et **en ce qu'**ils contiennent 50 à 98 % en poids de corps moulés, films, fils et/ou fibres polymères, et 2 à 50 % en poids de la combinaison agent ignifuge-stabilisateur selon une ou plusieurs des revendications 1 à 16.
